**Europäisches Patentamt**

**European Patent Office**

**Office européen des brevets**

(19)

(11) Veröffentlichungsnummer : **0 070 921**
**B1**

(12)

# EUROPÄISCHE PATENTSCHRIFT

(45) Veröffentlichungstag der Patentschrift :
02.01.86

(21) Anmeldenummer : 81106949.1

(22) Anmeldetag : 04.09.81

(51) Int. Cl.⁴ : **B 01 F  5/06**, F 28 F 25/08,
B 01 D 53/18, B 01 D 53/20,
B 01 D  3/24

(54) Einbauelement für eine Vorrichtung für Stoff- und direkten Wärmeaustausch und Mischen.

(30) Priorität : 30.07.81 CH 4923/81

(43) Veröffentlichungstag der Anmeldung :
09.02.83 Patentblatt 83/06

(45) Bekanntmachung des Hinweises auf die Patenterteilung : 02.01.86 Patentblatt 86/01

(84) Benannte Vertragsstaaten :
DE FR GB IT NL SE

(56) Entgegenhaltungen :
DE-A- 2 910 525
DE-A- 2 942 481
US-A- 1 561 044
US-A- 3 871 624

(73) Patentinhaber : **GEBRÜDER SULZER AKTIENGE-
SELLSCHAFT**
**Zürcherstrasse 9**
**CH-8401 Winterthur (CH)**

(72) Erfinder : **Plüss, Raymond**
**Einfangstrasse 182**
**CH-8450 Klein-Andelfingen (CH)**

(74) Vertreter : **Dipl.-Ing. H. Marsch Dipl.-Ing. K. Sparing**
**Dipl.-Phys. Dr. W.H. Röhl Patentanwälte**
**Rethelstrasse 123**
**D-4000 Düsseldorf (DE)**

## Beschreibung

Die Erfindung betrifft ein Einbauelement für eine Vorrichtung für Stoff- und/oder direkten Wärmeaustausch oder Mischen, das aus mehreren Lagen besteht, wobei Leitflächen innerhalb einer Lage parallel zueinander angeordnet und miteinander verbunden sind, wobei sich die Leitflächen von Lage zu Lage punktförmig berühren und wobei Leitflächen benachbarter Lagen sich kreuzen.

Aus der DE-A-2 942 481 ist ein solches Einbauelement als Rieselfüllung für Stoffaustauschkolonnen bekannt. Eine derartige Rieselfüllung soll aus schichtweise nebeneinander angeordneten Rieselflächen bestehen, wobei aus diesen Rieselflächen schräggestellte Leitflächen herausgebogen werden, welche die benachbarten Rieselflächen selbst oder deren ausgebogene Leitflächen punkt- oder linienförmig berühren sollen. Obwohl die Gleitflächen selbst auch einen Teil der gesamten Rieselfläche bilden, haben sie im wesentlichen auch die Funktion von Abstandshaltern von benachbarten ebenen Rieselflächen.

Eine zweite Ausführungsform von Einzelelementen für Stoffaustauschkolonnen mit einer Vielzahl vertikaler, einander paralleler Rieselflächen ist aus der DE-A-2 910 525 bekannt. Die parallelen Rieselflächen des bekannten Einbauelementes sollen hierbei in gleichen Abständen voneinander mittels, aus den Rieselflächen herausgebogenen Lappen gehalten werden.

Weiterhin sind aus der DE-B-2 328 795 und der DE-B-2 522 106 Einbauelemente für statische Mischer bekannt.

Die Aufgabe der bekannten Einbauelemente besteht hierbei darin, zwei oder mehrere im Gleichstrom fliessende Stoffe homogen zu mischen, d. h. bei jedem Mengen- und Zähigkeitsverhältnis der zu mischenden Komponenten eine hochwertige Mischgüte des Endproduktes über den gesamten Strömungsquerschnitt zu erreichen.

Die bisher üblichen Herstellungsverfahren für derartige Einbauelemente sind äusserst aufwendig, insbesondere im Hinblick auf das breite Spektrum der verschiedenen gewünschten Durchmesser.

So erfordern die Einbauelemente, wie sie aus der DE-B-2 328 795 und der DE-B-2 522 106 bekannt sind, und die im ersten Fall aus kreuzweise zusammengesteckten kammartigen Platten und im zweiten Fall aus zusammengefügten Einzelelementen in Art von « spanischen Reitern » bestehen, für jeden Durchmesser spezielle Stanzwerkzeuge.

Demgegenüber hat sich die Erfindung eine Struktur eines Einbauelementes zur Aufgabe gemacht, welche einfach und kostengünstig für jeden gewünschten Durchmesser hergestellt werden kann.

Diese Aufgabe wird gemäss der Erfindung dadurch gelöst, dass die Leitflächen an ihren Enden durch Verbindungsbrücken verbunden sind, welche in einem Winkel zu den Leitflächen liegen, wobei sich die Leitflächen benachbarter Lagen derart kreuzen, dass sie sich mit ihren Längskanten punktförmig berühren.

Ein vorteilhaftes Herstellungsverfahren für das erfindungsgemässe Einbauelement besteht darin, dass die Leitflächen jeder einzelnen Lage aus einem folienartigen Material durch Stanzen und durch Herausbiegen aus der Ebene der Folie geformt werden, und dass aus dem verbleibenden Material Verbindungsbrücken zwischen den einzelnen Leitflächen bestehen bleiben, und dass das Einbauelement derart gebildet wird, dass mindestens zwei Lagen aneinander gelegt werden, derart, dass sich die Leitflächen benachbarter Lagen kreuzen, wobei durch Aneinanderreihen verschieden langer Lagen, Einbauelemente von beliebigen Querschnitten erhalten werden können. Besteht das folienartigen Material aus Kunststoff, so können die Lagen auch durch Spritzgiessen hergestellt werden, wobei das Einbauelement ebenfalls derart gebildet wird, dass sich die Leitflächen benachbarter Lagen kreuzen.

Die Erfindung wird im folgenden anhand von in der Zeichnung dargestellten Ausführungsbeispiele erläutert.

Hierbei zeigt :

Figur 1 in perspektivischer Darstellung drei Ausschnitte von geländerartig ausgebildeten Lagen eines Einbauelementes,

Figur 2 einen Grundriss eines Ausschnittes einer derartigen Lage im gestanzten Zustand,

Figur 3 eine Aufsicht im ausgebogenen Zustand und

Figur 4 eine entsprechende Seitenansicht längs der Schnittlinie III-III der Fig. 3 hierzu.

In den Fig. 5, 6 und 7 sind Ausschnitte einer ersten, gegenüber der Fig. 2-4 abgewandelten Ausführungsform einer Lage, in den Fig. 8-10 Ausschnitte einer zweiten abgewandelten Ausführungsform einer Lage dargestellt.

In den Fig. 11-13 bzw. 14-16 sind Ausschnitte von zwei weiteren gegenüber den Fig. 8-10 und in den Fig. 17-19 gegenüber den Fig. 2-4 abgewandelten Ausführungsformen einer Lage dargestellt.

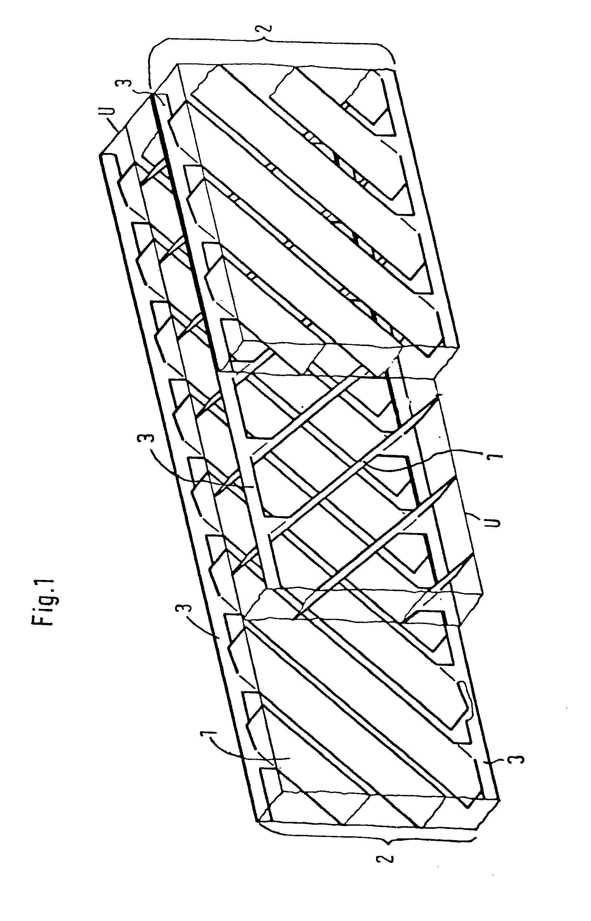

Fig. 1 zeigt Ausschnitte eines Ausführungsbeispieles von drei erfindungsgemässen hergestellten Lagen 2 vor dem Zusammenfügen.

Aus Gründen einer besseren Anschaulichkeit sind die Konturen der Lagen 2 durch Linien U angegeben.

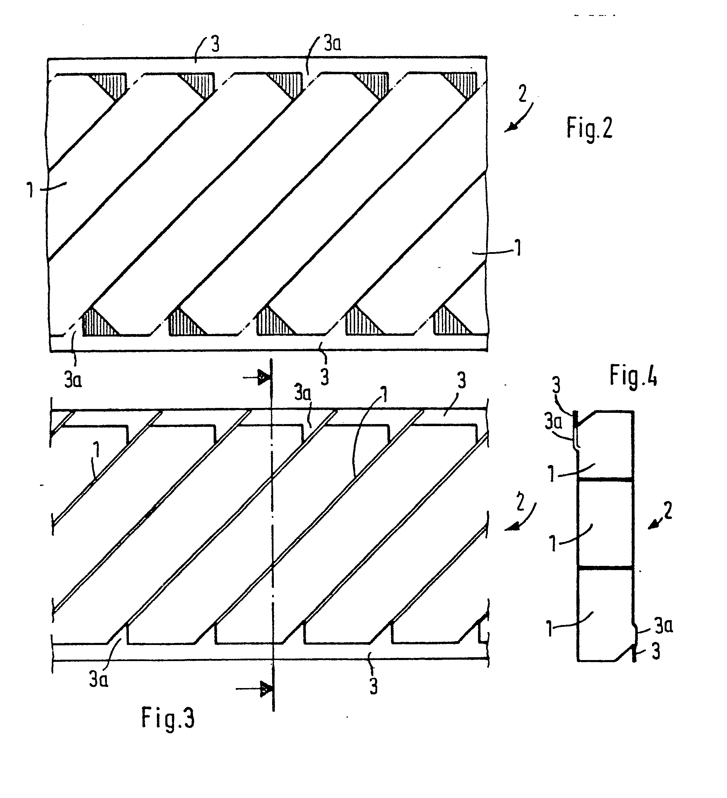

In den Fig. 2-4 sind die bei der Herstellung entstehenden Formen einer Lage 2 dargestellt.

So zeigt Fig. 2 im Grundriss einen Ausschnitt einer aus einem folienartigen Material, insbesondere Blech durch Stanzen gebildeten Lage 2.

Die Lage 2 weist ausgestanzte parallele Leitflächen 1 auf, die gegebenenfalls gelocht und/oder aufgerauht bzw. gerifft sind und die an beiden Enden mit jeweils einer Verbindungsbrücke 3 geländerartig über dreieckige Verbindungsstücke 3a verbunden sind. Bei dieser Ausführungsform sind die Leitflächen an ihren diagonal gegenüberliegenden Ecken mittels der Verbindungsstücke 3a mit den Verbindungsbrücken 3 verbunden.

Die schraffierten Flächen stellen beim Ausstanzen der Leitflächen entstehende Lücken dar, d. h. die Spitzen der Leitflächen werden beim Stanzen abgeschnitten, damit sie nicht aus der Lagenebene beim Ausbiegen herausragen.

Beim nächsten Schritt werden die Leitflächen um einen Winkel aus der Ebene der Verbindungsbrücken 3 herausgebogen, wie in Fig. 3 in einer Ansicht und in Fig. 4 in einer Seitenansicht längs der Schnittlinie III-III dargestellt ist. Nachdem die einzelnen Lagen geformt sind, werden sie derart aufeinander gelegt, dass sich die Leitflächen benachbarter Lagen kreuzen, wie in Fig. 1 angedeutet. Anschliessend werden die sich berührenden Verbindungsbrücken miteinander, z. B. durch Punktschweissen befestigt.

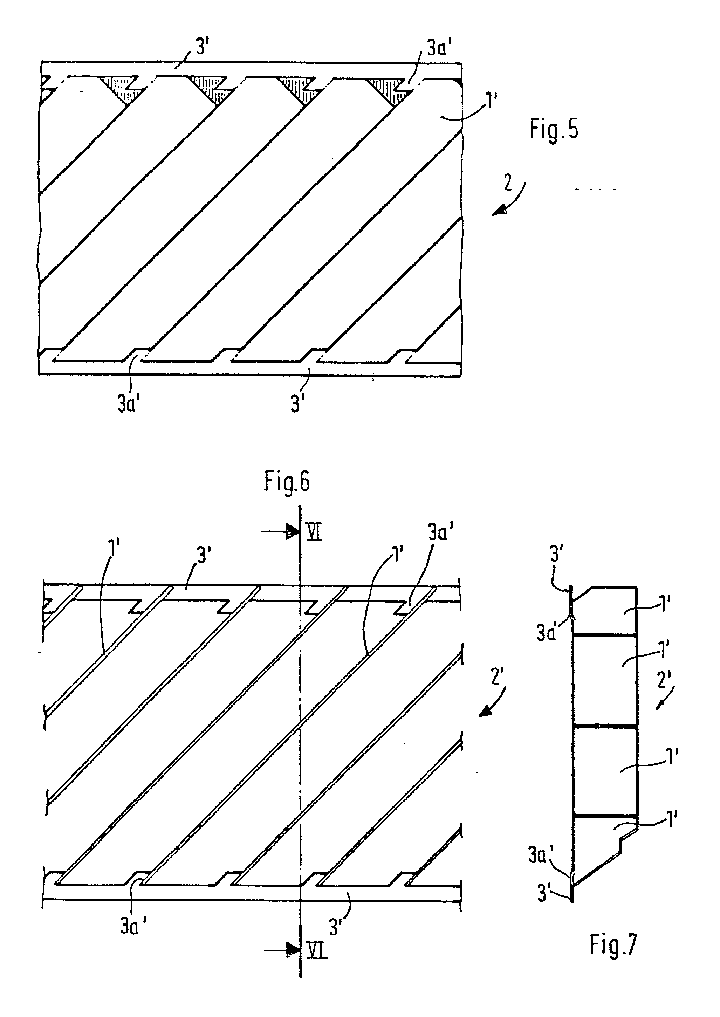

Die Fig. 5-7 zeigen eine Ausführungsform, die mit den Fig. 2-4 übereinstimmt, bis auf die abgewandelte Art der Verbindung der Leitflächen 1' mit den Verbindungsbrücken 3', die darin besteht, dass jede Leitfläche pro Lage an den beiden Enden einer Längsseite über Verbindungsstücke 3a' mit je einer Verbindungsbrücke 3' verbunden sind. Die mit den Fig. 2-4 übereinstimmenden Elemente sind mit den gleichen Bezugsziffern bezeichnet, jedoch mit einem Apostroph versehen.

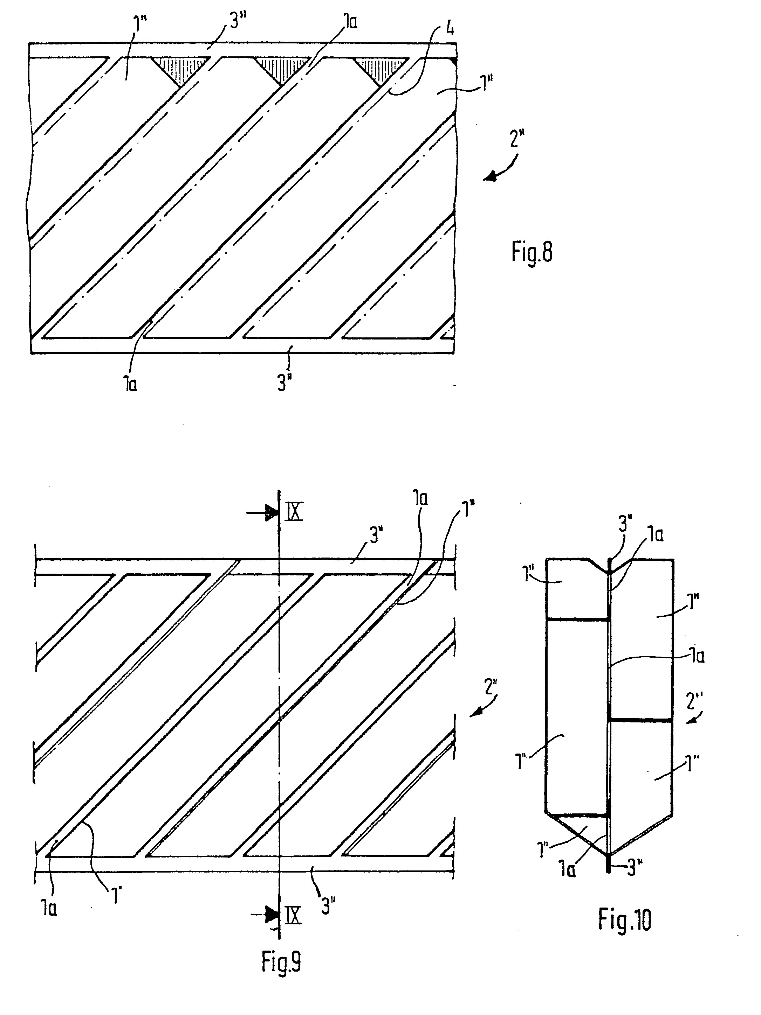

Die Fig. 8-10 zeigen in analoger Darstellungsweise zu den Fig. 2-4 bzw. 5-7 eine Ausführungsform einer Lage, bei welcher jeweils zwei Leitflächen 1" wechselseitig nach vorne und nach hinten ausgebogen sind.

Die mit den Fig. 1-7 übereinstimmenden Elemente sind mit den gleichen Bezugsziffern bezeichnet, aber mit " versehen.

Der in Fig. 8 dargestellte Grundriss zeigt wieder einen Ausschnitt einer Lage 2" mit ausgestanzten Leitflächen 1" und Verbindungsbrücken 3".

Die Lagen 3" weisen hierbei zusätzlich auf einer Längsseite ein Flächenelement 1a auf, welches beim Herausbiegen aus dem folienartigen Material in der Ebene der Verbindungsbrücken 3" verbleibt.

In Fig. 8 sind die Biegelinien 4 der Leitflächen 1" angegeben, um die die Leitflächen nach vorne bzw. nach hinten ausgebogen werden, wie aus der Fig. 9 und 10 hervorgeht.

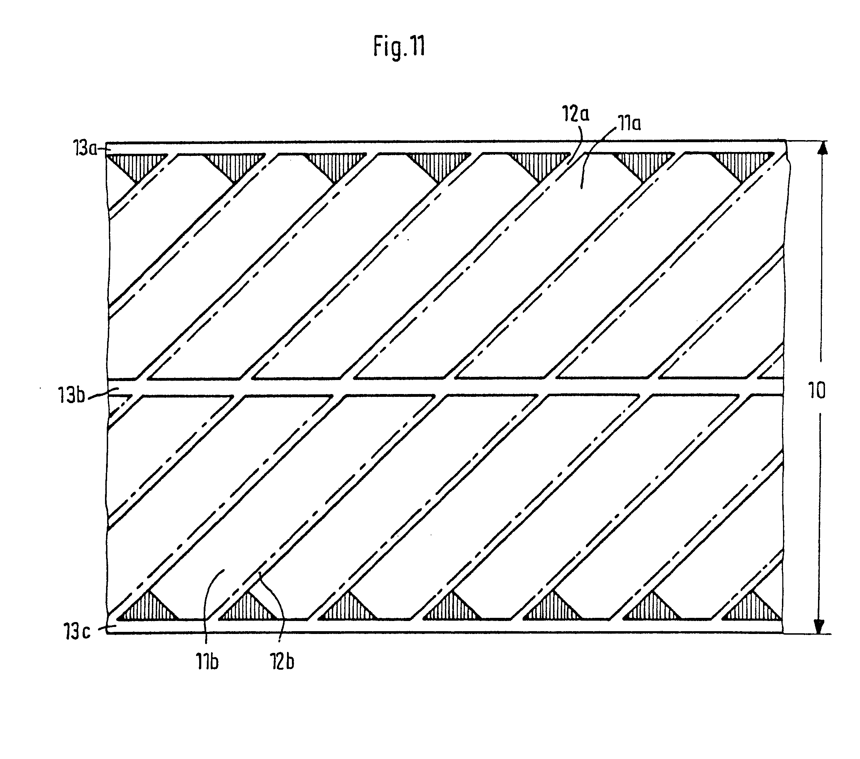

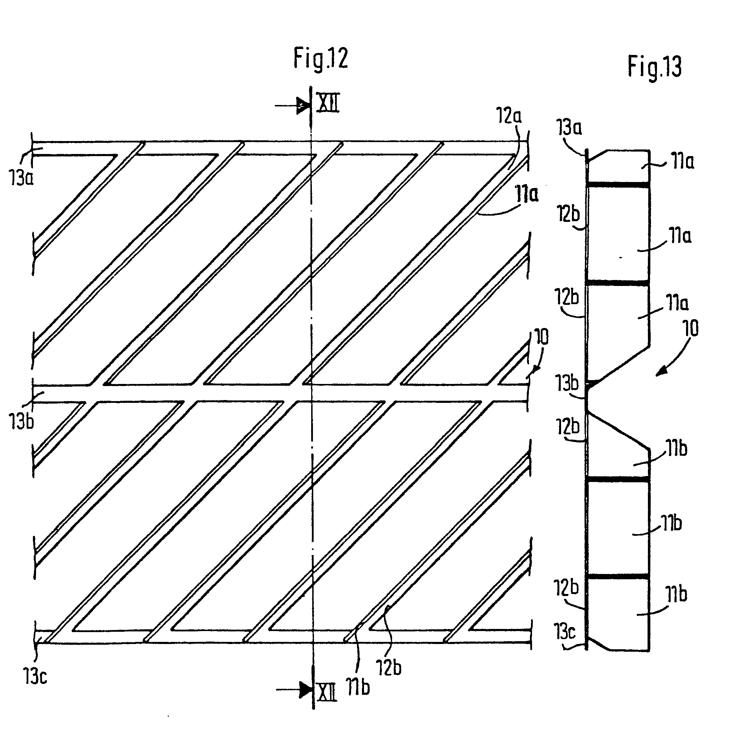

Fig. 11, 12 und 13 zeigen in analoger Darstellungsweise zu den Fig. 8-10 einen Ausschnitt einer Lage 10 in einem Grundriss im ausgestanzten Zustand, eine Ansicht im ausgebogenen Zustand und eine entsprechende Seitenansicht längs der Schnittlinie XII-XII.

Hierbei besteht jede Leitfläche aus zwei Teilstücken 11a und 11b, die analog zu Fig. 8 jeweils auf einer Längsseite zusätzlich ein Flächenelement 12a bzw. 12b aufweisen, welche beim Herausbiegen der Leitfläche aus dem folienartigen Material in der Ebene der Verbindungsbrücken 13a, 13b und 13c verbleiben.

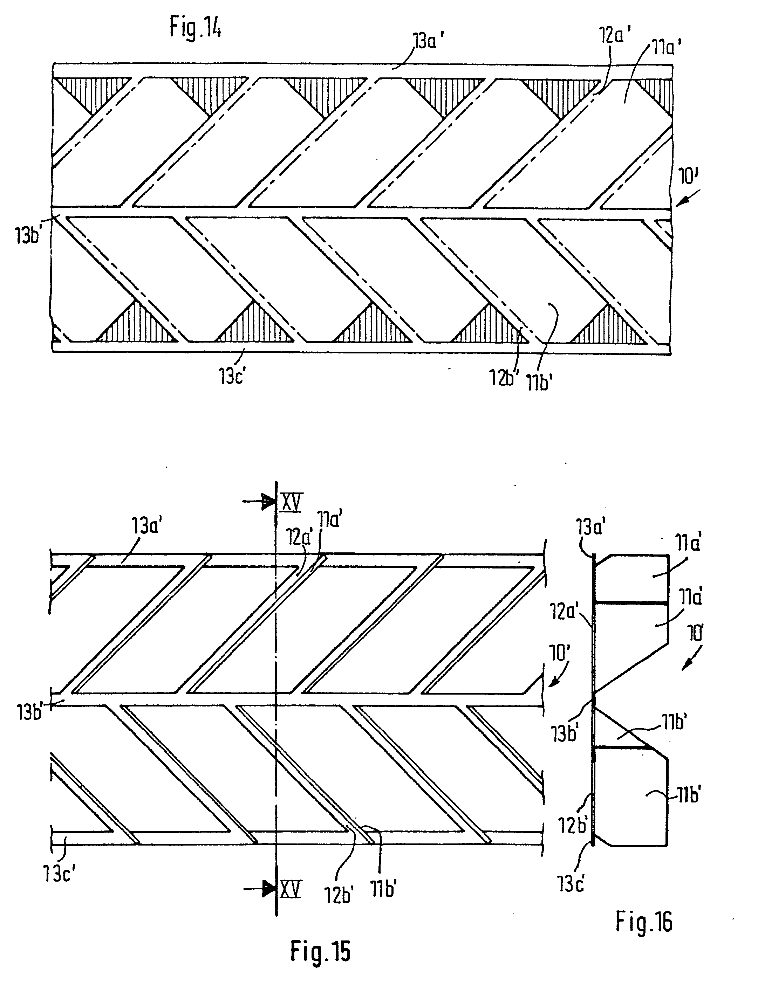

Die Fig. 14-16 zeigen in analoger Darstellungsweise zu Fig. 11-13 eine Ausführungsform, die darin abweicht, dass die Teilstücke 11a' und 11b' jeder Leitfläche einen Winkel miteinander einschliessen.

Die mit den Fig. 11-13 übereinstimmenden Elemente sind mit den gleichen Bezugsziffern bezeichnet und mit einem Apostroph versehen.

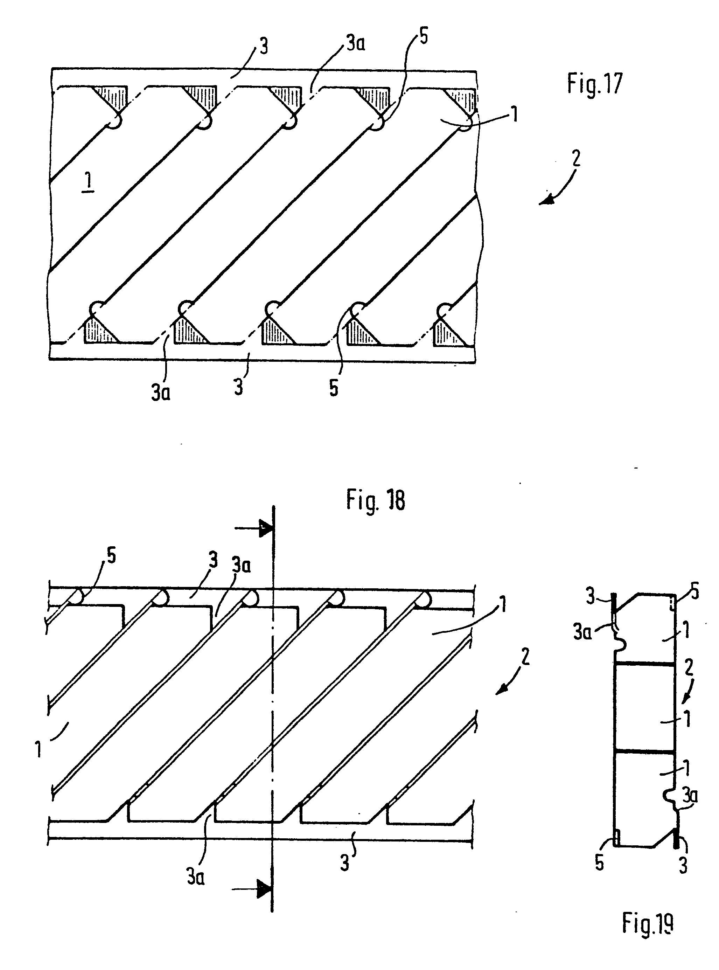

Die Fig. 17 und 18 zeigen mit den Fig. 2 und 4 übereinstimmende Lagen 2, wobei zusätzlich an den Leitflächen 1 Verbindungslaschen 5 bestehen bleiben, welche aus den nebenstehenden Leitflächen ausgestanzt sind. Die Verbindungslaschen 5 werden derart gebogen, dass sie in eine parallele Ebene zu den Verbindungsbrücken 3 zu liegen kommen, so dass eine zusätzliche Verbindungsmöglichkeit zwischen benachbarten Lagen 2 geschaffen werden kann.

Bei Verwendung der Einbauelemente als Packungskörper in Kolonnen sind die Lagen parallel zur Kolonnenachse angeordnet.

Vorteilhaft sind in diesem Anwendungsfall die Leitflächen an den Kanten ihrer Schmalseiten und/oder die Verbindungsbrücken an ihren freien Kanten zackenförmig ausgebildet, so dass sie für ein gleichmässiges Abströmen der flüssigen Phase dienen.

**Patentansprüche**

1. Einbauelement für eine Vorrichtung für Stoff- und/oder direkten Wärmeaustausch oder Mischen, das aus mehreren Lagen (2) besteht, wobei Leitflächen (1) innerhalb einer Lage (2) parallel zueinander angeordnet und miteinander verbunden sind, wobei sich die Leitflächen (1) von Lage (2) zu Lage (2) punktförmig berühren und wobei Leitflächen (1) benachbarter Lagen (2) sich kreuzen, dadurch gekennzeichnet, dass die Leitflächen (1) an ihren Enden durch Verbindungsbrücken (3) verbunden sind, welche in einem Winkel zu den Leitflächen (1) liegen, wobei sich die Leitflächen (1) benachbarter Lagen (2) derart kreuzen, dass sie sich mit ihren Längskanten punktförmig berühren.

2. Einbauelement nach Anspruch 1, dadurch gekennzeichnet, dass jede Leitfläche (1) pro Lage (2) an ihren Enden diagonal an gegenüberliegenden Ecken mit je einer Verbindungsbrücke (3) verbunden ist (Fig. 1 bis 4).

3. Einbauelement nach Anspruch 1, dadurch gekennzeichnet, dass jede Leitfläche (1') pro Lage (2') an ihren Enden einer Längsseite an zwei gegenüberliegenden Ecken mit je einer Verbindungsbrücke (3') verbunden ist (Fig. 5 bis 7).

4. Einbauelement nach Anspruch 1, dadurch gekennzeichnet, dass jede Leitfläche aus mindestens zwei Teilstücken (11a, 11b) besteht, die an ihren Enden einerseits mit einer mittleren Verbindungsbrücke (13b) und andererseits mit je einer End-Verbindungsbrücke (13a, 13b) verbunden sind (Fig. 11 bis 13).

5. Einbauelement nach Anspruch 4, dadurch gekennzeichnet, dass die Teilstücke (11a', 11b') jeder Leitfläche einen Winkel miteinander einschliessen (Fig. 14 bis 16).

6. Einbauelement nach Anspruch 1, dadurch gekennzeichnet, dass die einzelnen Lagen an ihren Verbindungsbrücken miteinander befestigt sind.

## Claims

1. A packing element for a mass transfer and/or direct heat-exchange or mixing device, the element consisting of a plurality of layers (2), guide surfaces (1) being disposed in parallel relationship and interconnected within a layer (2), the guide surfaces (1) being in point contact from layer (2) to layer (2) and guide surfaces (1) of adjacent layers (2) crossing one another, characterised in that the guide surfaces (1) are connected at their ends by connecting bridges (3) which are at an angle to the guide surfaces (1), the guide surfaces (1) of adjacent layers (2) so crossing as to be in point contact by their longitudinal edges.

2. A packing element according to claim 1, characterised in that each guide surface (1) per layer (2) is connected at its ends diagonally at opposite corners to a connecting bridge (3) in each case (Figures 1 to 4).

3. A packing element according to claim 1, characterised in that each guide surface (1') per layer (2') is connected at its ends of a longitudinal side at two opposite corners to a connecting bridge (3') in each case (Figures 5 to 7).

4. A packing element according to claim 1, characterised in that each guide surface consists of at least two parts (11a, 11b), which are connected at their ends on the one hand to a central connecting bridge (13b) and on the other hand to an end connecting bridge (13a, 13b) in each case (Figures 11 to 13).

5. A packing element according to claim 4, characterised in that the parts (11a', 11b') of each guide surface include an angle (Figures 14 to 16).

6. A packing element according to claim 1, characterised in that the individual layers are fixed to one another at their connecting bridges.

## Revendications

1. Elément de montage d'un dispositif pour l'échange direct ou le mélange de substances et/ou de chaleur, qui se compose de plusieurs couches (2), les surfaces de conduction (1) étant disposées parallèlement les unes aux autres et reliées entre elles à l'intérieur d'une couche (2), les surfaces de conduction (1) se touchant ponctuellement d'une couche (2) à l'autre (2) et les surfaces de conduction (1) de couches (2) voisines se croisant, caractérisé par le fait que les surfaces de conduction (1) sont reliées à leurs extrémités par des ponts de liaison (3) qui forment un angle par rapport aux surfaces de conduction (1), cependant que les surfaces de conduction (1) de couches (2) voisines se croisent de telle façon qu'elles se touchent ponctuellement avec leurs arêtes longitudinales.

2. Elément de montage selon la revendication 1, caractérisé par le fait que, par couche (2), chaque surface de conduction (1) est respectivement reliée par chacun des angles diagonalement opposés situés à ses extrémités, avec un pont de liaison (3) (figures 1 à 4).

3. Elément de montage selon la revendication 1, caractérisé par le fait que, par couche (2'), chaque surface de conduction (1') est respectivement reliée, par chacun des deux angles opposés situés aux extrémités d'un grand côté, à un pont de liaison (3') (figures 5 à 7).

4. Elément de montage selon la revendication 1, caractérisé par le fait que chaque surface de conduction est formée d'au moins deux parties (11a, 11b) qui sont reliées par leurs extrémités d'un côté à un pont de liaison central (13b) et respectivement de l'autre côté à des ponts de liaison terminaux (13a, 13b) (figures 11 à 13).

5. Elément de montage selon la revendication 4, caractérisé par le fait que les parties (11a', 11b') de chaque surface de conduction forment un angle l'une avec l'autre (figures 14 à 16).

6. Elément de montage selon la revendication 1, caractérisé par le fait que les différentes couches sont fixées l'une à l'autre par leurs ponts de liaison.

Fig.1

Fig.2

Fig.3

Fig.4

Fig.5

Fig.6

Fig.7

Fig.8

Fig.9

Fig.10

Fig.11

0 070 921

Fig.12

Fig.13

6 .

Fig.14

13a'  12a' 11a'

10'

13b'

13c'  12b' 11b'

Fig.15

13a'  12a' 11a'

10'

13b'

13c'  12b' 11b'

13a'  11a'

11a'

12a'  10'

13b'  11b'

11b'

12b'

13c'

Fig.16

Fig.17

Fig. 18

Fig.19